Europäisches Patentamt

(19) European Patent Office

Office européen des brevets

(11) Veröffentlichungsnummer: **0 029 224**
**B1**

(12) **EUROPÄISCHE PATENTSCHRIFT**

(45) Veröffentlichungstag der Patentschrift:
09.11.83

(21) Anmeldenummer: 80107013.7

(22) Anmeldetag: 13.11.80

(51) Int. Cl.³: **F 24 H 1/18,** F 24 D 11/02,
F 24 J 3/04

(54) Sorptionswärmepumpe mit angeschlossenem Brauchwasserspeicher.

(30) Priorität: 15.11.79 DE 2946076

(43) Veröffentlichungstag der Anmeldung:
27.05.81 Patentblatt 81/21

(45) Bekanntmachung des Hinweises auf die Patenterteilung:
09.11.83 Patentblatt 83/45

(84) Benannte Vertragsstaaten:
AT BE CH FR LI NL

(56) Entgegenhaltungen:
DE - A - 2 604 942
DE - C - 947 246
FR - A - 2 300 980
GB - A - 731 261
US - A - 3 907 025

(73) Patentinhaber: M.A.N. MASCHINENFABRIK
AUGSBURG-NÜRNBERG Aktiengesellschaft, Dachauer
Strasse 667 Postfach 50 06 20, D-8000 München 50 (DE)

(72) Erfinder: Eckert, Manfred, Dr.,
Paula-Wimmer-Strasse 36, D-8060 Dachau (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Sorptionswärmepumpe mit angeschlossenem Brauchwasserspeicher

Die Erfindung betrifft eine Sorptionswärmepumpe mit angeschlossenem Brauchwasserspeicher, mit einem Sorptionsaggregat bestehend aus einem Austreiber, einem Verdampfer mit vorgeschaltetem, regelbarem Expansionsventil sowie einem Absorber und einem Kondensator.

Als Wärmepumpensysteme mit angeschlossener Brauchwasserbereitung kennt man die elektromotorisch betriebene und die verbrennungsmotorisch betriebene Kompressionswärmepumpe, bei der ein mechanischer Verdichter über einen Elektromotor bzw. Verbrennungsmotor angetrieben wird (z. B. GB-A-731 261). Für ein Beheizen des Austreibers des Sorptionsaggregats sowie ein Aufheizen des Heißwassers für den Brauchwasserspeicher muß Primärenergie mehrfach umgewandelt werden, was zum Teil zu erheblichen Energieverlusten führt.

Aufgabe der Erfindung ist die Schaffung einer Sorptionswärmepumpe mit angeschlossenem Brauchwasserspeicher der eingangs genannten Art, bei der bei einfachem Aufbau die Primärenergie im Vergleich zu bekannten Vorrichtungen verlustarm über einen Sorptionsprozeß in das Brauchwasserheizsystem zuführbar ist, und damit ein guter Wirkungsgrad der Anlage erzielt wird.

Gelöst wird die der Erfindung zugrundeliegende Aufgabe dadurch, daß sämtliche das Arbeitsmittel, wie Ammoniak, führen Komponenten in einer kompakten ersten Anordnung zusammengefaßt sind, während die nicht das Arbeitsmittel führen Komponenten, wie Warmwasserspeicher, Ventile, Pumpen und elektronische Überwachung und Steuerung in einer zweiten kompakten Anordnung zusammengefaßt sind.

Die Anordnung ist insbesondere so getroffen, daß der wassergekühlte Absorber zusammen mit dem Kondensator als Wärmetauscher zum Aufheizen des Heizwassers dient.

Die Absorberkühlung kann zweckmäßigerweise als schraubenförmiges Rohrschlangensystem ausgebildet sein, das außen von Heizungswasser umströmt wird.

Eine vorteilhafte Weiterbildung der Erfindung sieht vor, daß das sich auf einem höheren Temperaturniveau befindliche Absorberlösungsrückführungs-Aggregat im inneren Hohlzylinder der Absorberkühlung angeordnet ist.

Bei einer weiteren vorteilhaften Weiterbildung der Erfindung ist vorgesehen, daß sowohl der Kondensator als auch der Verdampfer als schraubenförmige Rohrschlangen ausgebildet sind, wobei der innere Durchmesser der schraubenförmigen Anordnung so gewählt ist, daß der Kondensator und der Verdampfer den wassergekühlten, sich auf einem höheren Temperaturniveau befindlichen Absorber umhüllen.

Insbesondere kann ein Speicher für die integrale Brauchwassererwärmung vorgesehen sein, wobei für die Zuleitung der Wärme eine Rohrspirale ausgebildet ist, die bei Bedarf in einer Vorrangschaltung vom Heizungswasser durchflossen ist.

Besonders zweckmäßig ist es, wenn die erste Anordnung und die zweite Anordnung durch eine Blechverkleidung zusammengefaßt sind.

Erfindungsgemäß werden somit die einzelnen Komponenten verfahrenstechnisch so verschaltet, daß möglichst geringe Verlustwärmen auftreten. Damit wird ein guter Wirkungsgrad der Anlage erzielt. Brauchwassererwärmung sowie die Brauchwasserspeicherung ist erfindungsgemäß integraler Bestandteil des Gesamtaggregats. Besonderer Vorteil ist die einfache Montage und Wartung der Anlage, da die erste und die zweite Anordnung der einzelnen Komponenten jeweils als Subsystem in Form einer Montage- und Wartungseinheit aufgebaut sind, die für eine Bedienungsperson leicht zugänglich ist. Bei der Erfindung wird das aus der Kältetechnik bekannte Sorptionsverfahren mit z. B. dem Arbeitsstoffpaar Ammoniak/Wasser dergestalt herangezogen, daß es möglich ist, Heizungsverlauftemperaturen zu erzeugen, die für den überwiegenden Zeitraum (bis zu ca. 90%) einer Heizperiode benötigt werden. Es werden die aus der Kältetechnik bekannten Komponenten und Wärmetauscher verwendet.

Als bekannte Basiselemente umfaßt das Wärmepumpensystem einen Austreiber oder Kocher, in dem als Arbeitsstoff z. B. Ammoniakdampf aus stark ammoniakhaltigem Wasser durch Wärmezufuhr ausgetrieben wird. Als Heizmittel kommen Heizöl, Erdgas, feste Brennstoffe sowie elektrische Energie in Frage. Der ausgetriebene Dampf kondensiert im Kondensator, wo er seine Kondensationswärme in das Heizungswasser abgibt. Durch ein Expansionsventil wird das flüssige Ammoniak auf einen niederen Druck entspannt und dem Verdampfer zugeführt, wo es unter Wärmeaufnahme aus der Umgebung verdampft. Das verdampfte Ammoniak wird dem Absorber zugeleitet, der seinerseits die an Ammoniak verarmte Lösung des Austreibers erhält. Hierbei wird das schwach ammoniakhaltige Heißwasser aus dem Austreiber über ein zweites Expansionsventil dem Absorber zugeführt, wo es unter Wärmeabgabe den vom Verdampfer kommenden Ammoniakdampf löst. Die im Absorberaggregat angereicherte Ammoniaklösung wird über eine Umwälzpumpe in den Austreiber zurückgepumpt, wo der Austreibungsprozeß von neuem beginnt.

Die Verbindungsleitungen, die zwischen den beiden Montageeinheiten bestehen, führen nur Heizungswasser, Sole oder Hydrauliköl.

Die Erfindung wird nachfolgend anhand eines Ausführungsbeispiels unter Bezugnahme auf die Zeichnung näher erläutert; es zeigt

Fig. 1 eine schematische Seitenansicht der ersten und zweiten Anordnung nach der Erfindung,

Fig. 2 eine schematische Draufsicht auf die erste und zweite Anordnung gemäß Fig. 1 und

Fig. 3 ein Schaltungsdiagramm der Einzelkomponenten der Sorptionswärmepumpe mit angeschlossenem Brauchwasserspeicher gemäß den Fig. 1 und 2.

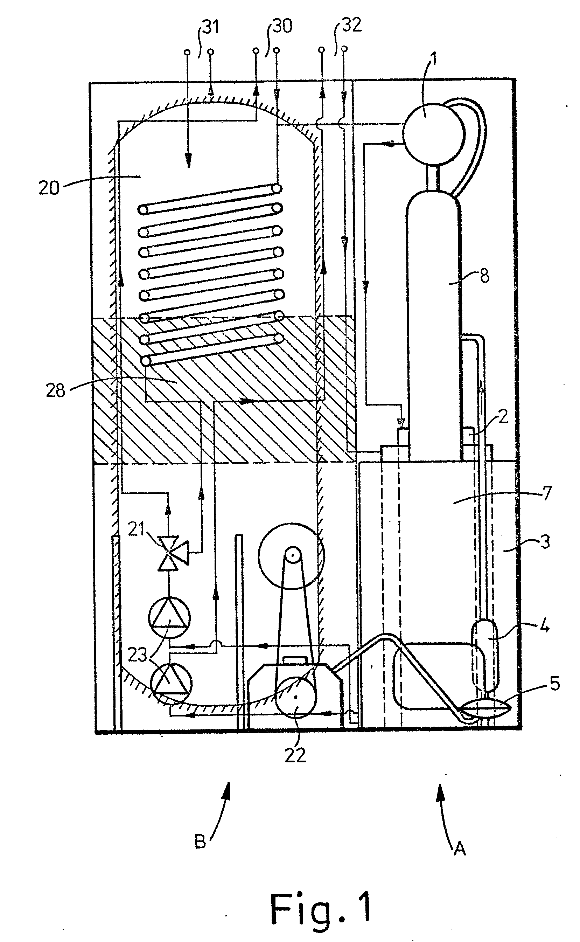

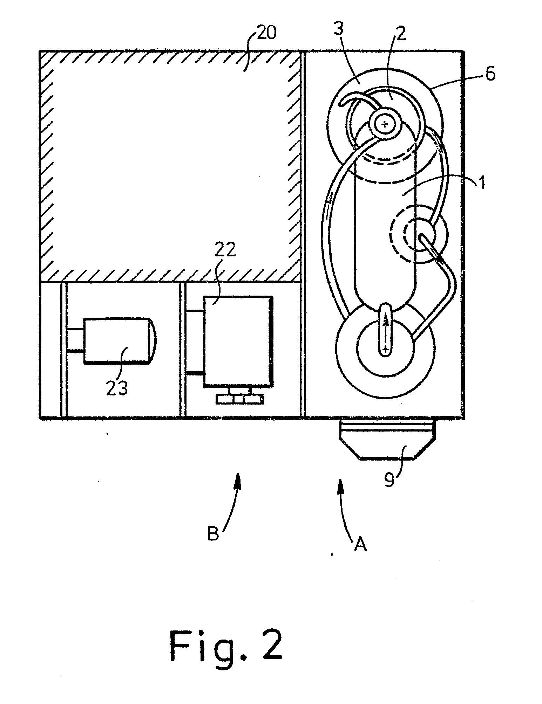

In den Fig. 1 und 2 sind die erste Anordnung A sowie die zweite Anordnung B der einzelnen Komponenten in kompakter Weise dargestellt, derart, daß die das Arbeitsmittel führenden Komponenten in einer ersten Anordnung A gemäß Zeichnung rechts und die nicht das Arbeitsmittel führenden Einzelkomponenten in einer zweiten Anordnung B gemäß Zeichnung links dicht benachbart von der ersten Anordnung A gelegen und in geeigneter Weise miteinander verbunden sind.

Die erste Anordnung A umfaßt im wesentlichen das Sorptionsaggregat bestehend aus einem Dephlegmator 1, einer Absorberkühlung 2, einem Verdampfer 3, einem Ammoniakbehälter 4, einer Membranpumpe 5 sowie einem Kondensator 6. Der Austreiber 7 wird von einem Brenner 9 beheizt, während der Rektifikator bei 8 vorgesehen ist.

Die zweite Anordnung B gemäß Zeichnung links umfaßt im wesentlichen einen Brauchwasserspeicher 20, Ventile 21, sowie Pumpen 22 und 23. Ferner ist in diese Anordnung eine elektronische Überwachungs- und Steuereinheit 28 integriert. Ferner weist die zweite Anordnung B Zu- und Abführungsleitungen für das Brauchwasser 31, die Sole 32 sowie die Heizung 30 auf. Beide Anordnungen A und B sind nur mit einem Minimum an Verbindungsleitungen miteinander verbunden, und zwar für das Heizungswasser, die Sole oder das Hydrauliköl.

Die räumliche Anordnung der Aggregate ist so gestaltet, daß der wassergekühlte Absorber, der zusammen mit dem Kondensator 6 die Wärme in den Heizungskreis überführt, als Rohrschlangensystem ausgebildet ist. Das Aggregat für die Lösungsrückführung befindet sich im Innenraum des wassergekühlten Absorbers. Durch diese Anordnung wird die von der Lösungsrückführung bei hoher Temperatur verursachte Wärmestrahlung unmittelbar vom Heizungswasser über den externen Kühlmantel aufgenommen. Der Kondensator 6 ist als koaxiales Rohrschlangensystem ausgebildet und um den Absorber gelegt, wobei die vom Absorber bei höherer Temperatur abgegebene Strahlungswärme vom Kühlmantel des Kondensators 6 aufgenommen wird. Die Verdampfung des Ammoniaks erfolgt in einem Rohrschlangensystem, das von einem, die Sole führenden Hüllmantel umgeben und koaxial zum Absorber angeordnet ist. Um einen zu großen Wärmeaustausch zwischen Verdampfer 3 und Absorber zu unterbinden, wird eine entsprechende Wärmedämmung in den Ringspalt eingebracht.

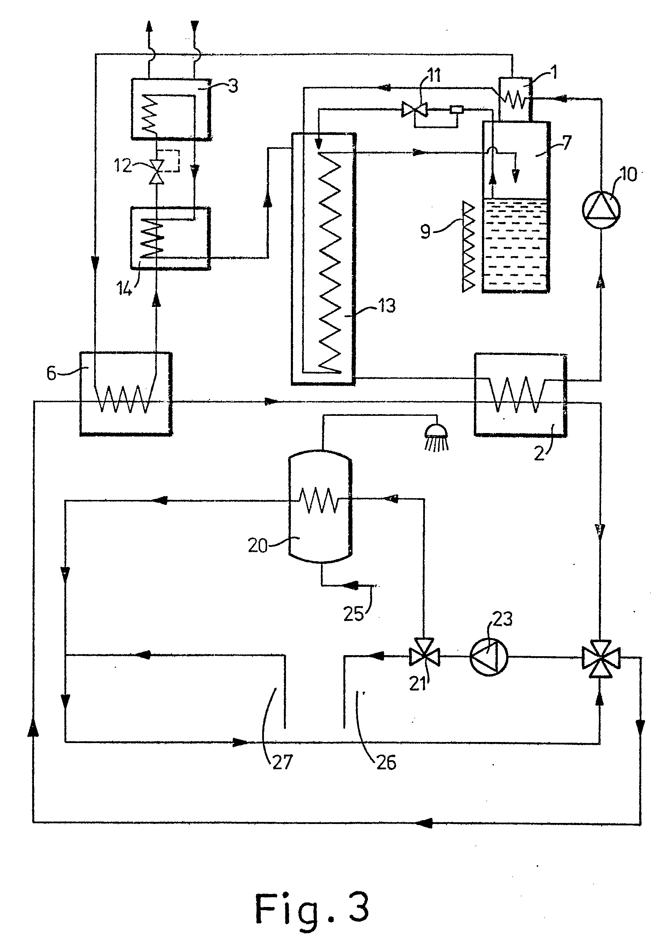

In Fig. 3 ist das integrale Schaltbild der Anlage schematisch dargestellt. Die das Sorptionsaggregat bestimmenden Einzelkomponenten sind hierbei gemäß Zeichnung oben und die die zweite Anordnung B kennzeichnenden Komponenten unten gezeigt. Die Einzelkomponenten sind hierbei im wesentlichen bereits im Zusammenhang mit den Fig. 1 und 2 beschrieben worden. Das Schaltbild zeigt ferner hinsichtlich des Sorptionsaggregates eine Lösungspumpe 10, Drosseln 11 und 12 sowie den Absorber 13 und den Temperaturwechsler 14. Mit den Bezugszeichen 26 und 27 werden der Vorlaufverteiler bzw. der Rücklaufverteiler gekennzeichnet, während die Kaltwasserleitung mit den Bezugszeichen 25 versehen ist.

Ersichtlich ist die Brauchwassererwärmung sowie Brauchwasserspeicherung integraler Bestandteil des Gesamtaggregats einer Absorberheizung mit kombinierter Brauchwasseraufbereitung.

Die in Fig. 3 veranschaulichten Regeleinheiten wie Ventile 21 und Pumpen 23, die erfindungsgemäß in einer Vorrangschaltung zur Aufheizung des Brauchwasserspeichers benötigt werden, sind nach den Fig. 1 und 2 in einem getrennten Montagerahmen zu einer Wartungseinheit zusammengefaßt, die gemeinsam mit dem Sorptionsaggregat in einem Gehäuse untergebracht ist.

Die Erfindung betrifft somit eine Sorptionswärmepumpe mit angeschlossenem Brauchwasserspeicher, wobei die Primärenergie bis auf einen kleinen Verlustanteil durch Wärmestrahlung und Abgaswärme über einen Sorptionsprozeß in ein Heizsystem für eine Brauchwasseraufbereitung übergeführt und mittels der in der Primärenergie enthaltenen Energie zusätzlich ein beträchtlicher Energieanteil aus der Umgebung (Luft, Grundwasser, Erdwärme oder Abwärme) in das Heizsystem gepumpt wird.

**Patentansprüche**

1. Sorptionswärmepumpe mit angeschlossenem Brauchwasserspeicher (20), mit einem Sorptionsaggregat bestehend aus einem Austreiber (7), einem Verdampfer (3) mit vorgeschaltetem, regelbarem Expansionsventil (12) sowie einem Absorber (13) und einem Kondensator (6), dadurch gekennzeichnet, daß sämtliche das Arbeitsmittel, wie Ammoniak, führenden Komponenten (1—14) in einer kompakten ersten Anordnung (A) zusammengefaßt sind, während die nicht das Arbeitsmittel führenden Komponenten, wie Warmwasserspeicher (20), Ventile (21), Pumpen (22, 23) und elektronische Überwachungs- und Steuereinheit (28) in einer zweiten kompakten Anordnung (B) zusammengefaßt sind.

2. Sorptionswärmepumpe nach Anspruch 1, dadurch gekennzeichnet, daß der Wärmetauscher zum Aufheizen des Heizwassers durch eine wassergekühlte Absorberkühlung (2) und den Kondensator (6) gebildet ist.

3. Sorptionswärmepumpe nach Anspruch 1 oder 2, dadurch gekennzeichnet, daß die Absorberkühlung (2) als schraubenförmiges Rohrschlangensystem ausgebildet ist, das außen von Heizungswasser umströmt wird.

4. Sorptionswärmepumpe nach Anspruch 1 bis 3, dadurch gekennzeichnet, daß das sich auf einem höheren Temperaturniveau befindliche Absorberlösungsrückführungs-Aggregat im inneren Hohlzylinder der Absorberkühlung (2) angeordnet ist.

5. Sorptionswärmepumpe nach Anspruch 1 bis 4, dadurch gekennzeichnet, daß sowohl der Kondensator (6) als auch der Verdampfer (3) als schraubenförmige Rohrschlangen ausgebildet sind, wobei der innere Durchmesser der schraubenförmigen Anordnung so gewählt ist, daß der Kondensator (6) und der Verdampfer den wassergekühlten, sich auf einem höheren Temperaturniveau befindlichen Absorber (13) umhüllen.

6. Sorptionswärmepumpe nach Anspruch 1 und 2, dadurch gekennzeichnet, daß ein Speicher (20) für die integrale Brauchwassererwärmung vorgesehen ist, wobei für die Zuleitung der Wärme eine Rohrspirale ausgebildet ist, die bei Bedarf in einer Vorrangschaltung vom Heizungswasser durchflossen ist.

7. Sorptionswärmepumpe nach einem der vorhergehenden Ansprüche, dadurch gekennzeichnet, daß die erste Anordnung (A) und die zweite Anordnung (B) durch eine Blechverkleidung zusammengefaßt sind.

## Claims

1. An absorption heat pump with a connected hot-water storage tank (20), an absorption unit consisting of a separator (7), an evaporator (3) preceded by a controllable expansion valve (12), and an absorber (13) and a condenser (6), characterised in that all the components (1 – 14) carrying the working medium, e. g. ammonia, are combined in a compact first arrangement (A), while those components which do not carry the working medium, e. g. the hot-water storage tank (20), valves (21), pumps (22, 23) and electronic monitoring and control unit (28), are combined in a second compact arrangement (B).

2. An absorption heat pump according to claim 1, characterised in that the heat exchanger for heating the hot-water is formed by a water-cooled absorber cooling system (2) and the condenser (6).

3. An absorption heat pump according to claim 1 or 2, characterised in that the absorber cooling system (2) is in the form of a helical tube coil system around the outside of which the heating water flows.

4. An absorption heat pump according to claims 1 to 3, characterised in that the absorber solution recycling unit, which is at a higher temperature level, is disposed in the inner hollow cylinder of the absorber cooling system (2).

5. An absorption heat pump according to claims 1 to 4, characterised in that both the condenser (6) and the evaporator (3) are in the form of helical tube coils, the inside diameter of the helical arrangement being so selected that the condenser (6) and the evaporator surround the water-cooled absorber (13), which is at a higher temperature level.

6. An absorption heat pump according to claims 1 and 2, characterised in that a storage tank (20) is provided for the integral hot-water heating, a tube coil being provided for the heat supply and, when required, having the heating water flowing through it in a priority circuit.

7. An absorption heat pump according to any one of the preceding claims, characterised in that the first arrangement (A) and the second arrangement (B) are combined by a sheet-metal panelling.

## Revendications

1. Pompe à chaleur à sorption, à laquelle est raccordé en réservoir (20) d'eau non potable, comportant une unité à sorption constituée par un dispositif extracteur (7), un évaporateur (3) comportant une soupape de détente (12) réglable, branchée en amont, ainsi qu'un absorbeur (13) et un condenseur (6), caractérisée en ce que tous les composants (1 – 14) véhiculant le fluide de travail, tel que de l'ammoniac, sont rassemblés dans un premier ensemble compact (A) tandis que les composants ne véhiculant pas le fluide de travail, tels que le réservoir d'eau chaude (20), des soupapes (21), des pompes (22, 23) et une unité (28) de contrôle et de commande électronique, sont rassemblés dans un second ensemble compact (B).

2. Pompe à chaleur à sorption selon la revendication 1, caractérisée en ce que l'échangeur de chaleur servant à échauffer l'eau chaude est formé par un dispositif (2) de refroidissement de l'absorbeur, refroidi par eau, et par le condenseur (6).

3. Pompe à chaleur à sorption selon la revendication 1 ou 2, caractérisée en ce que le dispositif (2) de refroidissement de l'absorbeur est réalisé sous la forme d'un système à serpentin tubulaire hélicoïdal autour duquel circule l'eau de chauffage.

4. Pompe à chaleur à sorption selon la revendication 1 à 3, caractérisée en ce que le système de renvoi de la solution de l'absorbeur, situé à un niveau supérieur de température, est disposé dans le cylindre creux intérieur du dispositif (2) de refroidissement de l'absorbeur.

5. Pompe à chaleur à sorption selon la revendication 1 à 4, caractérisée en ce qu'aussi bien le condensateur (6) que l'évaporateur (3) sont réalisés sous la forme de serpentins tubulaires hélicoïdaux, le diamètre intérieur du dispositif hélicoïdal étant choisi de manière que le condenseur (6) et l'évaporateur entourent l'absorbeur (13) refroidi par eau et situé à un niveau de température supérieur.

6. Pompe à chaleur à sorption selon la revendication 1 et 2, caractérisée en ce qu'il est prévu un réservoir (20) pour le chauffage intégral de l'eau non potable, tandis qu'il est prévu pour l'amenée de la chaleur un tube en spirale qui est éventuellement parcouru, selon un circuit prioritaire, par l'eau de chauffage.

7. Pompe à chaleur à sorption selon l'une des revendications précédentes, caractérisée en ce que le premier ensemble (A) et le second ensemble (B) sont réunis par un revêtement en tôle.

Fig. 1

Fig. 2

Fig. 3